# EUROPEAN PATENT APPLICATION

(11) **EP 2 019 363 A2**
(43) Date of publication of application: **28.01.2009**
(21) Application number: 08161009.9
(22) Date of filing: 23.07.2008
(51) Int. Cl.: G06F 21/00

(54) **Method and device for communication**

(30) Priority: 23.07.2007 CN 200710130019; 17.03.2008 WO PCT/CN2008/070515
(71) Applicant: Huawei Technologies Co., Ltd., Longgang District, Shenzhen Guangdong 518129 (CN)
(72) Inventor: Gu, Lingzhi, 518129, Shenzhen (CN); Chen, Weifeng, 518129, Shenzhen (CN)
(74) Representative: Hengelhaupt, Jürgen

(57) **Abstract**

A communication method and a communication device, the communication method including: obtaining a network configuration in a user's operating system; loading a customized operating system and an application; and communicating, by the application, with other entities under the customized operating system according to the network configuration.

## Description

This application claims the priority of Chinese Application No. 200710130019.8 filed on July 23, 2007, titled ***METHOD AND DEVICE FOR COMMUNICATION,*** and PCT application No. PCT/CN2008/070515, filed on March 17, 2008, which are incorporated herein by reference in its entirety.

### Field of the Invention

The present invention relates to information security technology, and in particular to a communication method and a communication device.

### Background of the Invention

Modern society is a society of network informationalization. Human work and life depend more and more on internet, and more and more business (for example, e-banking, security exchange and on-line shopping, etc.) may be performed on the Internet. Doing such business on internet greatly facilitates human work and life. However, the concomitant problem of network information security becomes more and more serious; for example, hackers may steal some key network information, such as account and password, via various means (for example, via backdoor software, Trojan, virus and network fishing, etc.).

To guarantee the security of the network information during communication, a method for guaranteeing the security of the network information in the prior art is described by taking e-banking as an example. For example, in order to prevent some key network information from being stolen by a hacker via various means (for example, via backdoor software, Trojan, virus and network fishing, etc.), the existing e-banking mainly employs the following technologies: using security control, digital certificate, mobile certificate and so on when performing identity authentication.

Identity authentication may be performed during a log-on procedure via security control. Such security control makes an ordinary virus/Trojan program unable to capture the account and password of the e-banking by preventing keyboard/message hook and COM port (a data interface for communicating with other objects) for filtering Internet Explorer (IE, a type of browser). However, because the security control and the virus/Trojan program are in the same operating system environment, and such security control and the virus/Trojan are in the same level, the stealing behavior of user account and/or password by some viruses/Trojans may not be prevented.

Identity authentication may also be performed during a log-on procedure via digital certificate. Because digital certificate is an ordinary file stored in the operating system, and may be stolen in a system where the virus/Trojan exists, illegal behaviors may not be prevented when a user performs identity authentication using digital certificate, account and/or password after user account and/or password is stolen.

Identity authentication may also be performed during a log-on procedure via mobile certificate. Although the viruses/Trojans cannot steal the mobile certificate, if there is virus/Trojan in the system, there also exists a possibility that the account and/or password may be stolen. After the account and/or password is stolen, there may also be a great risk for the user.

### Summary of the Invention

The embodiments of the present invention are illustrated in conjunction with the drawings for those in the art to understand and implement the invention.

An embodiment of the present invention provides a communication method, including:
obtaining a network configuration in a user's operating system;
loading a customized operating system and application; and
communicating, by the application, with other entities under the customized operating system according to the network configuration.

An embodiment of the present invention also provides a communication device, including:
an installation unit, adapted to obtain a network configuration in a user's operating system, load a customized operating system, perform the network configuration in the customized operating system and load an application; and
an application unit, adapted to communicate with other entities according to the network configuration, under the customized operating system.

According to the embodiments of the invention, by running an application on a customized operating system, the running environment of the application may be completely isolated from the user's original operating system, and the problems caused by a virus/Trojan, spy software and loophole of the user's operating system existing on the user's original operating system may be completely solved, thereby avoiding stealing of the network information by the virus/Trojan and so on, and preventing various hidden troubles caused by the loophole of the user's operating system.

### Brief Description of the Drawings

Figure 1 is a flow chart of a communication method according to an embodiment of the present invention; and

Figure 2 is a schematic diagram of a communication device according to an embodiment of the present invention.

### Detailed Description of the Embodiments

The embodiments of the present invention are illustrated in conjunction with the drawings for those in the art to understand and implement the present invention.

In an embodiment of the present invention, when a user needs to use an application (for example e-banking and security exchange software), the current state of the original operating system on the user machine (for example personal computer and server, etc.) is stored and the hardware resource is released to load a customized operating system, and the application is loaded in the customized operating system. Thus, the application will run on the customized operating system, physically isolated from the original operating system on the user machine completely. Therefore, the damage caused by the Trojan/virus and so on in the original operating system may be completely avoided. The communication method and communication device according to the present invention is described below in detail in conjunction with more specific embodiments.

### Embodiment 1

An embodiment of the present invention provides a communication method. Before communication, an application installer needs to be obtained and the application installer is running on a user machine. The application installer includes an installer, an application, a customized operating system and a restore program.

The installer is adapted to obtain the network configuration in a user's operating system and store all the states of the user's operating system, load a customized operating system, perform the network configuration obtained in the user's operating system in the customized operating system, and load an application (such as e-banking and security exchange software). After the user applies for a certain service, the user may obtain an application installer from the service provider. The application installer may be stored in a read-only storage medium (for example, compact disc).

The application is adapted to communicate with other entities (for example, network side entities or other client ends); in other words, a user machine with the application installed communicates with other entities (for example, network side entity or other client ends).

The customized operating system is adapted to provide a running environment for the application. The customized operating system may be any safe operating system that can provide a running environment for the application.

The restore program is adapted to exit from the application after the user finishes the usage of the application, shut down the customized operating system, start the user's operating system and restore the stored system state.

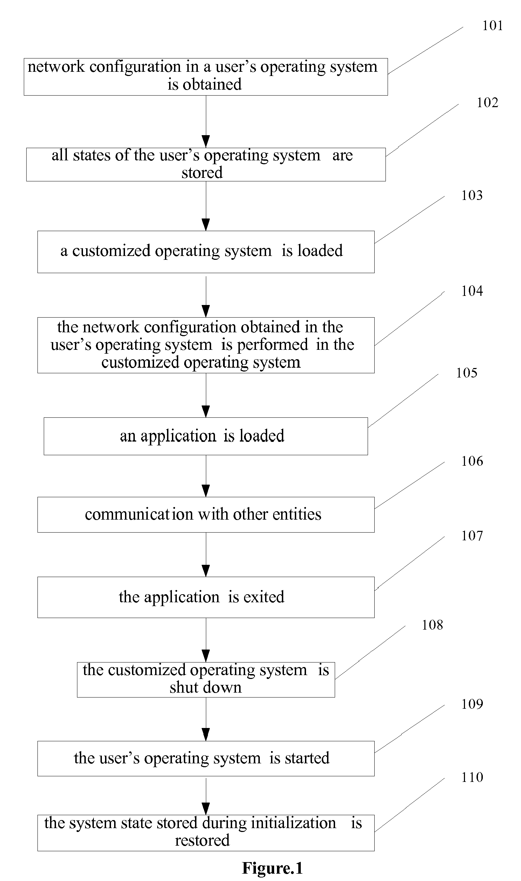

As shown in figure 1, a communication method according to an embodiment of the present invention is described.

In block 101, the network configuration in a user's operating system is obtained.

The current network configuration of the system is obtained by reading the system configuration file in the user's operating system or examining the system state, and the obtained network configuration is stored.

In block 102, the site is protected; in other words, all the states of the user's operating system are stored.

To store all the states of the user's operating system, the information about the whole memory of the current system may be stored, for example, in a form of a file.

In block 103, a customized operating system is loaded, and the customized operating system may be stored in a mobile storage medium such as compact disc or a U-disk, etc.

In block 104, the network configuration obtained in the user's operating system is performed in the customized operating system.

In block 105, the application (for example, e-banking and security exchange software) is loaded under the customized operating system. In other words, the application is loaded after the customized operating system is loaded.

In block 106, the application communicates with other entities (for example, network side entities or other client ends) under the customized operating system; in other words, a user machine with the application installed communicates with other entities (for example, network side entities or other client ends).

In block 107, the user exits from the application after using the application.

In block 108, the customized operating system is shut down.

In block 109, the user's operating system is started up.

In block 110, the site is restored; in other words, all the stored states of the user's operating system are restored. Restoring the stored system state means restoring the backup memory data to the memory to restore the state of the operating system before switching.

In the above flow, block 102 may be omitted, meanwhile omitting blocks 108 to 110; in addition, block 107 and block 108 may also be omitted.

When a user needs to use some application (for example, e-banking and security exchange software) on a user machine, the user stores the state of the user's operating system and then releases the hardware resource to load a customized operating system. Thus, the application will run on the customized operating system, completely isolating from the user's operating system. As a result, the security threat to the application due to the virus, Trojan, spy software, loophole of the user's operating system and so on existing on the user's operating system may be avoided.

### Embodiment 2

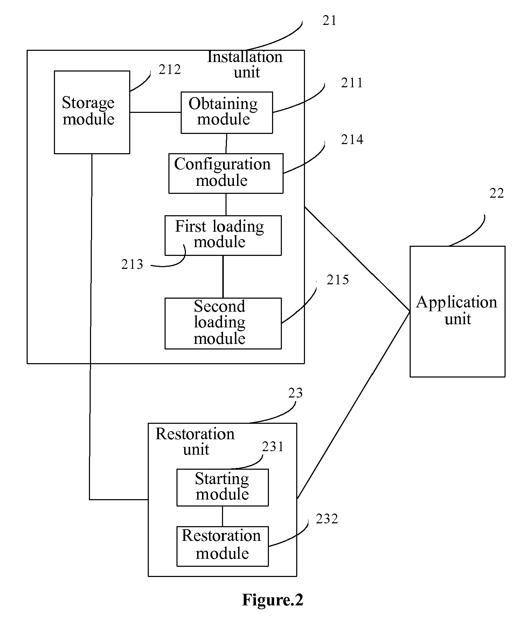

As shown in figure 2, an embodiment of the present invention provides a communication device. The communication device includes an installation unit 21 and an application unit 22, and may also include restoration unit 23.

The installation unit 21 is adapted to obtain the network configuration in a user's operating system, store all the states of the user's operating system and load a customized operating system, perform the network configuration obtained in the user's operating system in the customized operating system, and load an application (for example, e-banking and security exchange software) under the customized operating system. The customized operating system is adapted to provide a running environment for the application unit. The customized operating system may be any safe operating system capable of providing a running environment for the application.

The installation unit 21 includes an obtaining module 211, a first loading module 213, a configuration module 214 and a second loading module 215. The obtaining module 211 is adapted to obtain the network configuration in a user's operating system; the first loading module 213 is adapted to load a customized operating system; the configuration module 214 is adapted to perform the network configuration obtained in the user's operating system in the customized operating system; and the second loading module 215 is adapted to load an application (for example, e-banking and security exchange software) under the customized operating system.

The application unit 22 is adapted to communicate with other entities (for example, network side entities or other client ends) under the customized operating system; the customized operating system is shut down after the application unit finishes the communication.

The restoration unit 23 is adapted to start the user's operating system, and restore the state of the user's operating system according to all the states of the user's operating system stored by the storage module.

As shown in figure 2, the installation unit 21 may also include a storage module 212, being adapted to store all the states of the user's operating system (referring to block 102 in **Embodiment 1** for the storage method), so as provide the state of the user's operating system when the restoration unit 23 restores the user's operating system.

It should be noted that, the obtaining module 211 may also store the obtained network configuration in the user's operating system to the storage module 22. The configuration module 214 obtains the network configuration from the storage module 22 and performs the network configuration in the customized operating system.

The restoration unit 23 includes a starting module 231, adapted to start the user's operating system; a restoration module 232, adapted to restore the state of the user's operating system on the user's operating system according to all the states of the user's operating system stored in the storage module 212.

According to embodiments of the present invention, by running an application on a customized operating system, the running environment of the application may be completely isolated from the user's original operating system, and security threat to the application due to the virus, Trojan, spy software, loophole of the user's operating system and so on existing on the user's original system may be avoided. When the user needs to use the application, the state of the user's operating system is stored and then the hardware resource is released to load a customized operating system. Thus, the application will run on the customized operating system, being isolated from the user's operating system. As a result, the security threat to the application due to the virus, Trojan, spy software, loophole of the user's operating system and so on existing on the user's operating system may be avoided.

A "computer-readable medium" provided by embodiments of the present invention may be any medium that can contain, store, communicate, propagate, or transport the program for use by or in connection with the instruction execution system, apparatus, system or device. The computer readable medium can be, by way of example only but not by limitation, an electronic, magnetic, optical, electromagnetic, infrared, or semiconductor system, apparatus, system, device, propagation medium, or computer memory.

Though the present invention has been described with reference to some exemplary embodiments, as known by those skilled in the art, there are many modifications and changes to the present invention without departing from the spirit and essential of the present invention. The scope of the present invention is defined by the appended claims.

## Claims

1. A communication method, comprising:
obtaining a network configuration in a user's operating system;
loading a customized operating system and an application; and
communicating, by the application, with other entities according to the network configuration, under the customized operating system.

2. The method according to claim 1, further comprising:
storing all states of the user's operating system before loading the customized operating system and the application; and
restoring all the stored states of the user's operating system after the communication is finished.

3. The method according to claim 1, further comprising:
performing the network configuration in the customized operating system after loading the customized operating system.

4. The method according to claim 1, further comprising:
obtaining an installer of the application; and
loading the application using the installer of the application.

5. The method according to claim 4, wherein, the installer of the application is stored in a read-only medium.

6. A computer readable medium, **characterized in that** computer program code according to any one of claims 1 to 5 is stored on the computer readable medium.

7. A communication device, comprising:
an installation unit, adapted to obtain a network configuration in a user's operating system, load a customized operating system, perform the network configuration in the customized operating system and load an application; and
an application unit, adapted to communicate with other entities according to the network configuration, under the customized operating system.

8. The communication device according to claim 7, wherein, the installation unit comprises:
an obtaining module, adapted to obtain the network configuration in the user's operating system;
a first loading module, adapted to load the customized operating system;
a configuration module, adapted to perform the network configuration obtained by the obtaining module in the customized operating system; and
a second loading module, adapted to load the application under the customized operating system.

9. The communication device according to claim 8, wherein, the installation unit further comprises:
a storage unit, adapted to store all states of the user's operating system; and
a restoration unit, adapted to shut down the customized operating system after the application unit finishes the communication, start the user's operating system, and restore a system state of the user's operating system according to all the states of the user's operating system stored by the storage module.

10. The communication device according to claim 9, wherein, the restoration unit comprises:
a starting module, adapted to start the user's operating system; and
a restoration module, adapted to restore a state of the user's operating system, according to all the states of the user's operating system stored by the storage module, under the user's operating system started by the starting module.
